# EUROPÄISCHE PATENTANMELDUNG

(11) **EP 2 254 050 A2**
(43) Veröffentlichungstag der Anmeldung: **24.11.2010**
(21) Anmeldenummer: 10005065.7
(22) Anmeldetag: 14.05.2010
(51) Int. Cl.: G06F 9/50

(54) **Verfahren zur effizienteren Nutzung von Computerressourcen in hochverfügbaren Datenverarbeitungs- und/oder Datenbanksystemen**

(30) Priorität: 20.05.2009 DE 102009002113
(71) Anmelder: Schmid, Michael, 88138 Sigmarszell (DE)
(72) Erfinder: Schmid, Michael, 88138 Sigmarszell (DE)
(74) Vertreter: Meyer, Thorsten

(57) **Zusammenfassung**

Die Erfindung betrifft ein Verfahren zur effizienteren Nutzung von Computerresourcen, insbesondere bei hochverfügbaren Datenverarbeitungssystemen und Datenbanksystemen, welches Verfahren einen hohen Datendurchsatz bei niedrigen Kosten ermöglicht.

## Beschreibung

Die Erfindung betrifft ein Verfahren zur effizienteren Nutzung von Computerresourcen, insbesondere bei hochverfügbaren Datenverarbeitungssystemen (DV-Systemen) und Datenbanksystemen, welches einen hohen Datendurchsatz bei niedrigen Kosten ermöglicht.

Für die Verwaltung von großen Datenmengen werden Datenbanksysteme benötigt, die eine hohe Abfragegeschwindigket und einen hohen Datendurchsatz ermöglichen. Die durchschnittlichen Datenmengen wachsen immer weiter an, und benötigen immer schnellere Computer und Technologien. Der aktuelle Stand der Technik verwendet Mehr-Prozessor-Computer mit internen oder externen Festplatten-Verbunde, häufig angebunden über Hochgeschwindigkeitsverbindungen wie Fibre-SAN (SAN; Storage-Area-Network) o.ä. Der Nachteil dieser Technik ist die begrenzte Bandbreite vom Bussystem (PCI, PCIe) zu den Speichermedien, die relativ langsamen Zugriffszeiten der Festplatten und einem überflüssig hohen Datentransfer-Volumen. Einen aktuellen Überblick über den Stand der Technik bekommt man auf der Webseite des Transaction Processing Concil (www.tpc.org), wo eine Liste der schnellsten Datenbanksysteme bzw der Datenbanksysteme mit den besten Preis/Leistungsverhältnis aufgelistet ist. Die dort einsehbaren Detailbeschreibungen der getesteten Systeme listen detailiert die verwendeten Architekturen, CPUs, Arbeitsspeicher, Festplatten, Netzwerkverbindungen und viele weiteren Details auf.

Der aktuelle Stand der Technik zeigt zwar sehr schnelle Datenverarbeitungssysteme, diese sind jedoch Spezialmaschinen und entsprechend teuer. Weiterhin haben bestehende Systeme den Nachteil, dass die Bandbreite und der Durchsatz zum nicht flüchtigen Speicher spätestens durch das Bussystem (PCIe) limitiert wird, über den die Recheneinheiten auf den nicht flüchtigen Speicher zugreifen.

Aus der ISBN 978-59593-686-8 InfiniteDB "a PC cluster based parallel massive database management system", Jianzhong Li et al., ist ein Verfahren bekannt, um mehrere Computer zu einem parallelen arbeitenden Abfrage System zu kombinieren und dadurch die Abfragegeschwindigkeit zu erhöhen. Dieses System ist jedoch nur für sich nicht oder selten ändernde Daten einzusetzen. Bei einer Änderung am Datenbestand (Einfügen, Ändern oder Löschen von Daten) muss ein Wartungslauf durchgeführt werden. Weiterhin bietet die dort gezeigte Lösung nur parallel Verarbeitung von Abfragen, Datenmanipulationen wie Einfügen, Ändern und Löschen können nicht parallelisiert werden. Somit ist dieses System nicht für OLTP (online transaction processing) Aufgaben einsetzbar.

Weiter nachteilig an dem dort beschriebenen System ist die Tatsache, dass Datensicherheit nur durch massive Redundanz erreicht werden kann, was hohe Anforderungen und Kosten an die verwendeten Speichermedien stellt. Die bei InfiniteDB vorgeschlagene Methode, die Koordination der parallelen Abfragen und Ergebnismengen auf dem Client auszuführen, erhöht sich zwar bei einfachen Abfragen die Geschwindigkeit, macht jedoch andererseits Trigger, Server procedues usw. unmöglich. Außerdem ist bei komplexen Abfragen(Order-by, group-by, union etc.), wo mehrere Zwischenergebnisse verarbeitet werden müssen, eine Koordination durch den Client eher hinderlich, und mit Sicherheit langsamer. Zusätzlich ist bei der vorgeschlagenen Einbindung der Clients für jeden Client eine Hochgeschwindigkeits-Netzwerkwerk Anbindung notwendig, da große Datenmengen bei Zwischenergebnissen ausgetauscht werden müssen. Das ist wirtschaftlich uneffizient, wenn man davon ausgeht, dass relativ wenigen Server sehr viele Clients gegenüberstehen. Eine Nutzung von Arbeitsspeicher anstelle von Festplatten ist schließlich ebenfalls nicht möglich, da keine Sicherungsmechanismen, keine Schreibcache Synchronisierung, kein paralleles Record-Locking und keine Online Partitionierung vorhanden ist.

Aufgabe der Erfindung ist es, ein Verfahren zur Nutzung von Computerressourcen bei Datenverarbeitungssystemen und Datenbanksystemen sowie ein Datenverarbeitungs- bzw. Datenbank-System anzugeben, dass hochverfügbar, ACID (Atomic, Consistent, Isolated and Durable) fähig, in der Leistung linear skalierbar und dennoch preiswert ist.

Diese Aufgabe wird durch ein Verfahren nach den Merkmalen des Anspruchs 1 bzw. durch ein Datenverarbeitungssystem und/oder Datenbanksystem nach den Merkmalen des Anspruchs 7 gelöst.

Ein erster Gegenstand der Erfindung betrifft demnach ein Verfahren zur Nutzung von Computerressourcen bei hochverfügbaren Datenverarbeitungssystemen und Datenbanksystemen, bei dem mehr als zwei eigenständige Recheneinheiten, jeweils bestehend aus CPU, Arbeitsspeicher, mindestens einem Netzwerkanschluss für ein Clusternetzwerk und mindestens einem Netzwerkanschluss für ein Clientnetzwerk, über ein Clusternetzwerk zusammengeschaltet werden, welche Recheneinheiten Daten im Arbeitsspeicher halten, wobei jede Recheneinheit ihre Arbeitsspeicher-Daten über einen XOR Algorithmus auf die anderen Recheneinheiten sichert, wo diese ebenfalls im Arbeitsspeicher abgelegt werden, und wobei jede Recheneinheit die Anfragen von Clients annehmen, diese parallelisieren, an die anderen Recheneinheiten weiterleiten, diese parallelisierten Abfragen parallel ausführen, das eigene Ergebnis und die Ergebnisse der anderen Recheneinheiten zusammenfügen und an den Client zurückgeben kann.

Das erfindungsgemäße Verfahren ermöglicht es, eine beliebige Anzahl preiswerter Standardcomputer, z.B. PCs, zu einem hochperformanten, ASIC transaktionssicheren, hochverfügbaren und beliebig skalierbaren arbeitsspeicher-basierten Datenverarbeitungs- und Datenbanksystem zu kombinieren, auf dem eine EDV-mäßige Datenspeicherung und -verarbeitung durchgeführt werden kann.

Die Sicherung der Arbeitsspeicher-Daten einer Recheneinheit über einen XOR Algorithmus auf die anderen Recheneinheiten kann z.B. in RAID5 Manier erfolgen. Um eine gleichmäßige Auslastung aller Recheneinheiten zu erreichen, können die Clients periodisch über die Auslastung jeder Recheneinheit informiert werden und bei Abfragen diejenige Recheneinheit auswählen, welche die geringste Auslastung hat. Vorzugsweise führen die Clients die Partitionierung der Daten durch, indem sie Einfügeoperationen abwechselnd auf jeweils anderen Recheneinheiten durchführen. Ferner ist denkbar, dass jede Recheneinheit die Verfügbarkeit der anderen Recheneinheiten überwacht, und bei Ausfall einer solchen die Rekonstruktion der XOR-gesicherten Daten einleitet. Darüber hinaus können z.B. in einstellbaren Abständen die Daten aus dem Arbeitsspeicher auf ein anderes Speichermedium gespeichert werden.

Ein zweiter Gegenstand der Erfindung betrifft ein arbeitsspeicher-basiertes Datenverarbeitungssystem und/oder Datenbanksystem, in der mehrere Computer, z.B. mehrere Standardcomputer zu einem Server-Cluster zusammengeschaltet werden. Diese Computer im Cluster sind über ein Hochgeschwindigkeitsnetzwerk verbunden. Jeder dieser Computer im Cluster hat zusätzlich Netzwerkkarten, um an das Clientnetzwerk angebunden zu werden. Die im Arbeitsspeicher (RAM; Random Access Memory) gespeicherten Datensätze werden über die einzelnen Clustercomputer partitioniert, so dass ein Datensatz sich nur auf einem der Cluster Computer befindet. Zusätzlich werden, z.B. wie bei einem RAID5 Festplattenarray, XOR Daten des Datensatzes auf anderen Cluster Computer gespeichert, damit bei einem Ausfall eines Cluster Computers die Daten von den anderen rekonstruiert werden können. Jeder Cluster Computer berechnet für seine Datensätze die XOR Daten und speicherte diese über das Hochgeschwindigkeits-Netzwerk entsprechend auf den anderen Cluster Computern. Somit wird kein zentraler RAID/XOR Controller (wie bei Festplatten-Verbünden) benötigt, es gibt diesbezüglich kein "Single-Point-of-failure", kein Datendurchsatz limitierendes Bussystem. Mit dem Hinzufügen weiterer Cluster Computer kann die Leistungsfähigkeit linear gesteigert werden.

Die Verbesserung zum Stand der Technik besteht einerseits darin, durch Parallelschaltung mehrerer Computer zu einem Cluster, bei gleichzeitiger Nutzung des Arbeitsspeichers (RAM) als Speichermedium, einen parallelen Zugriff auf ein sehr schnelles Speichermedium (RAM) zu erhalten. Weiterhin wird zur Hochverfügbarkeit des Systems eine Spiegelung, bzw XOR Sicherung, des Arbeitsspeichers vorgeschlagen, die analog zu den bekannten Mechanismen bei Festplatten (RAID) implementiert wird, sowie Batteriepufferung jedes Cluster Knotens. Darüber hinaus ermöglicht die Erfindung, eine beliebige Anzahl preiswerter Standardcomputer, z.B. PCs, zu einem hochperformanten, ASIC transaktionssicheren, hochverfügbaren und beliebig skalierbaren Datenverarbeitungssystem und/oder Datenbanksystem zu kombinieren, was bislang nach dem Stand der Technik nicht möglich ist (siehe www.tpc.org).

Auf die in jedem Cluster Computer vorhandene Festplatte(n) kann in regelmäßigen Abständen die Datensätze vom Arbeitsspeicher gesichert werden. Dieser Verbund von Cluster Computern, Hochgeschwindigkeitsnetzwerk, Datensatzpartitionierung und XOR-Daten-Verteilung wird im Nachfolgenden RAMMS5 genannt (RAMMS = **R**edundant **A**rray of **M**ain **M**emory **S**ystems, in Anlehnung an RAID5). Weiterhin sieht die Erfindung vor, einen RAMMS5 Verbund auf einen weiteren RAMMS5 Verbund zu spiegeln, analog zu RAID50 bei Festplatten. Erfindungsgemäß können alle bei Festplatten-RAID bekannten Konstellationen auch hier genutzt werden, RAID50 sei nur als Beispiel genannt.

Jeder Computer in einem RAMMS5 Verbund hat eine Abfrage-Einheit, über die ein Client Datensätze abfragen oder manipulieren kann. Bei einer Client Abfrage nutzt diese Abfrage-Einheit dann die Abfrage-Einheiten der anderen Cluster Computer (über das Hochgeschwindigkeits-Netzwerk), um auf alle Daten zugreifen zu können. Die Abfrage-Einheiten der anderen Cluster Computer liefern dann nur die Daten zurück, die der Anfrage entsprechen (Vorverarbeitung bzw. Vorselektion der Daten auf jedem Cluster Computer). Dadurch arbeiten alle Cluster Computer CPUs an dieser Abfrage, und nutzen die gesamt addierte Speicherbandbreite dafür. Dadurch wird eine Skalierbarkeit der CPUs und der Speicherbandbreite für jede Abfrage erreicht.

Die Vorteile dieses Systems sind die Verwendung von RAM als Speichermedium, das dass um den Faktor 100-1000 schnellere Zugriffe erlaubt als Festplatten. Die parallele Architekture ermöglicht weiterhin, dass mit jedem weiteren Cluster Computer die nicht nur die CPU Rechenleistung, sonder auch die Bandbreite auf das Speichermedium zunimmt. Da jeder Cluster Computer auch eine Neztwerk-Verbindung zum Client Netzwerk hat, steigt beim Hinzufügen weiterer Cluster Computer auch die Netzwerk-Bandbreite zu den Clients. Durch die Ausfallsicherheit (XOR-Raid + Spiegelung) und die preiswerte Standard-Hardware können so hochverfügbare und beliebig skalierbare Systeme zu geringen Kosten hergestellt werden.

Nach einer besonders vorteilhaften Ausgestaltung der Erfindung ist vorgesehen, dass Datensätze in Tabellen gruppiert werden, wobei grosse Tabellen gleichmäßig auf alle Cluster Computer partitioniert werden. Kleine Tabellen werden bis zu einem einstellbaren Limit auf allen Cluster Computer redundant gespeichert, um den Kommunikationsaufwand bei verknüpften Tabellenabfragen zur verringern.

Nach einer weiteren vorteilhaften Ausgestaltung der Erfindung ist vorgesehen, dass jeder Cluster Computer eine eigene unterbrechungsfreie Stromversorgung besitzt.

Nach einer weiteren vorteilhaften Ausgestaltung der Erfindung ist vorgesehen, dass die Clients die Verteilung der eingefügten Daten übernehmen, indem sie bei Einfügeoperationen die Daten jeweils in einen anderen Cluster Computer einfügen.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines erfindungsgemäßen Datenverarbeitungs- und/oder Datenbanksystems.
- Fig. 2: eine schematische Darstellung von Einfügeoperationen, wobei ein Client die Verteilung vornimmt.
- Fig. 3: schematischer Ablauf einer Abfrage.

Die in den Figuren gleichen Bezugsziffern bezeichnen gleiche oder gleich wirkende Elemente.

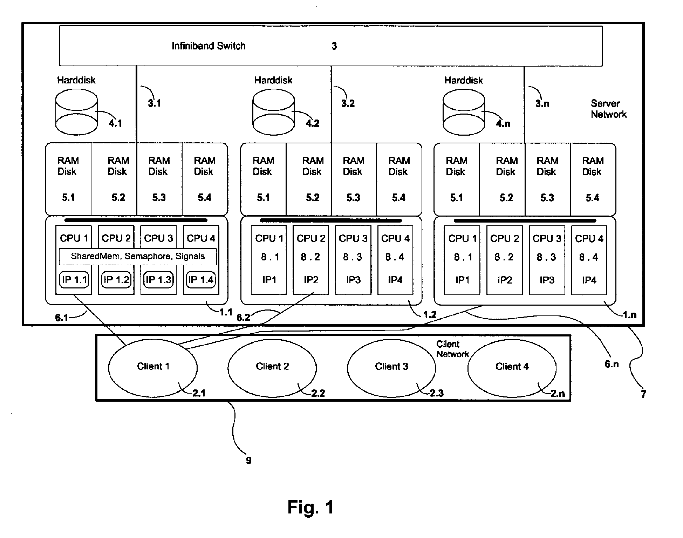

In Fig. 1 ist die Erfindung anhand eines beispielhaften Darstellung schematisch dargestellt.

Ein in Fig. 1 schematisch dargestelltes auch als Server Cluster oder Server Network bezeichnetes erfindungsgemäßes Datenverarbeitungs- und/oder Datenbanksystem 7 besteht aus beliebig vielen, jedoch mehr als einem, Cluster Computern 1.1 bis 1.n. Gezeigt sind drei Cluster Computer 1.1, 1.2, 1.n. Jeder dieser Cluster Computer 1.1, 1.2, 1.n beinhaltet eine oder mehrere CPUs 8.1, 8.2, 8.3, 8.4, und für jede CPU 8.1, 8.2, 8.3, 8.4 einen zugeordneten Arbeitsspeicher Bereich, beispielsweise ausgebildet als RAM Disk 5.1, 5.2, 5.3, 5.4. Gezeigt sind vier CPUs 8.1, 8.2, 8.3, 8.4 je Cluster Computer 1.1, 1.2, 1.n. Weiterhin besitzt jeder Cluster Computer 1.1, 1.2, 1.n mindestens ein Netzwerk Anschluss 3.1, 3.2, 3.n an ein auch als Clusternetzwerk bezeichnetes Hochgeschwindigkeitsnetzwerk, um über einen Switch 3 auf die anderen Cluster Computer 1.2, 1.n, 1.1 zugreifen zu können. Sind mehr als eine CPU 8.1, 8.2, 8.3, 8.4 in einem Cluster Computer 1.1, 1.2, 1.n vorhanden, so kommunizieren diese untereinander vorzugsweise via Standard-Interprocess Kommunikation wie Semaphoren, Shared memory usw. Die Kommunikation zwischen Cluster Computern 1.1, 1.2, 1.n erfolgt über das Hochgeschwindigkeitsnetzwerk, das beispielsweise als Infiniband o.ö. ausgebildet ist. Die Datensicherung erfolgt über die in jedem auch als Knoten bezeichneten Cluster Computer 1.1, 1.2, 1.n eingebaute Festplatte oder Festplatten 4.1, 4.2, 4.n. Weiterhin erhält jeder Cluster Computer 1.1, 1.2, 1.n für jede CPU 8.1, 8.2, 8.3, 8.4 eine Netzwerkverbindung 6.1, 6.2,' 6.n zu einem Clientnetzwerk 9. Jede CPU 8.1, 8.2, 8.3, 8.4 enthält eine eindeutige Netzwerkadresse + Portnummer, um von im Clientnetzwerk 9 angesiedelten Clients 2.1, 2.2, 2.3, 2.n eindeutig identifiziert werden zu können.

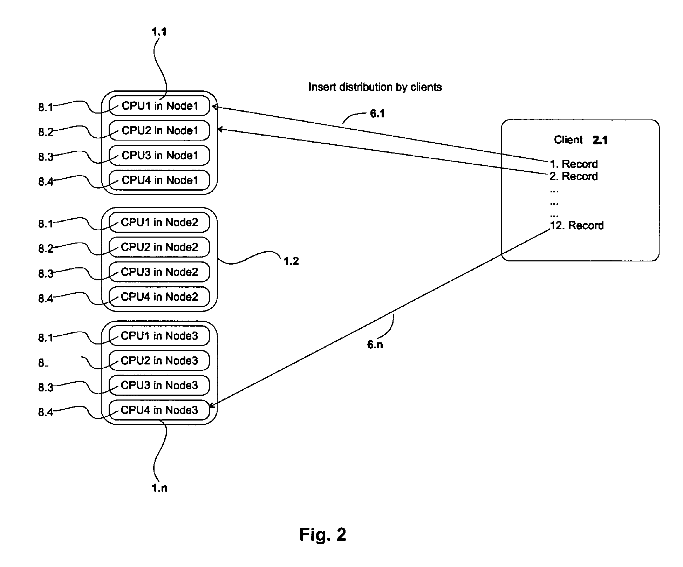

In Fig. 2 ist der Mechanismus zur Partitionierung durch die Clients 2.1, 2.2, 2.3, 2.n zu sehen. Jeder Client 2.1, 2.2, 2.3, 2.n verteilt seine einzufügenden Datensätze auf alle auch als Server bezeichenbaren Cluster Computer 1.1, 1.2, 1.n. Vorzugsweise nimmt jeder Client 2.1, 2.2, 2.3, 2.n auch sogleich innerhalb jeden Cluster Computers 1.1, 1.2, 1.n die Verteilung auf die einzelnen CPUs 8.1, 8.2, 8.3, 8.4 vor.

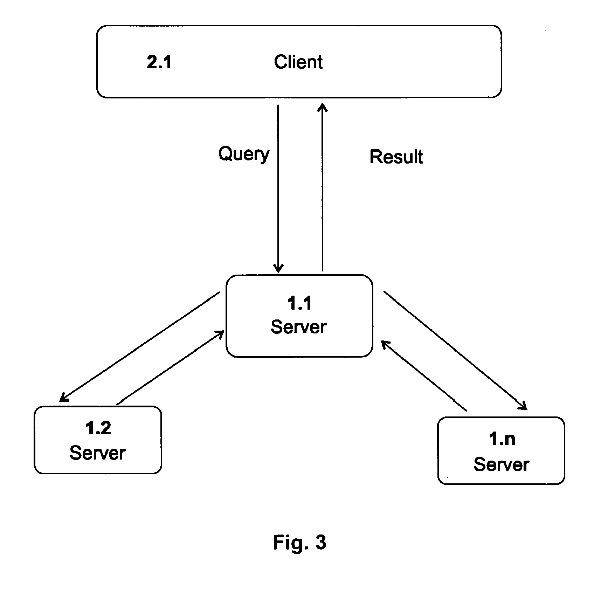

Der Ablauf einer Abfrage ist dargestellt in Fig. 3. Ein Client 2.1 wird periodisch von allen Cluster Computern 1.1, 1.2, 1.n über ihre aktuelle Auslastung informiert. Will der Client 2.1 nun eine Abfrage durchführen, wählt er denjenigen Cluster Computer 1.1, 1.2, 1.n aus, der aktuell die geringste Auslastung hat. Beispielsweise ist dies der Cluster Computer 1.1. Der Client 2.1 sendet daraufhin seine Abfrage an diesen Cluster Computer 1.1. Der Cluster Computer 1.1 nimmt die Abfrage entgegen, parallelisiert diese und leitet sie an alle anderen Cluster Computer 1.1, 1.2, 1.n weiter. Dann beginnt er selbst, seinen Teil der Abfrage auszuführen, nimmt die Ergebnisse der anderen Cluster Computer 1.2, 1.n entgegen, erzeugt daraus das Resultat und gibt das Resultat an den abfragenden Client 2.1 zurück.

### Bezugszeichenliste

- 1.1: (erster) Cluster Computer
- 1.2: (zweiter) Cluster Computer
- 1.n: (n-ter) Cluster Computer
- 2.1: (erster) Client
- 2.2: (zweiter) Client
- 2.3: (dritter) Client
- 2.n: (n-ter) Client
- 3.1: Hochgeschwindigkeits-Netzwerk Verbindung des ersten Cluster Computers
- 3.2: Hochgeschwindigkeits-Netzwerk Verbindung des zweiten Cluster Computers
- 3.n: Hochgeschwindigkeits-Netzwerk Verbindung des n- ten Cluster Computers
- 4.1: permanentes Speichermedium des ersten Cluster Computers
- 4.2: permanentes Speichermedium des zweiten Cluster Computers
- 4.n: permanentes Speichermedium des n-ten Cluster Computers
- 5.1: Arbeitsspeicher der ersten CPU
- 5.2: Arbeitsspeicher der zweiten CPU
- 5.3: Arbeitsspeicher der dritten CPU
- 5.4: Arbeitsspeicher der vierten CPU
- 6.1: Netzwerkverbindung vom ersten Cluster Computer zum ersten Client
- 6.2: Netzwerkverbindung vom zweiten Cluster Computer zum ersten Client
- 6.n: Netzwerkverbindung vom n-ten Cluster Computer zum ersten Client
- 7: Datenverarbeitungs- und/oder Datenbanksystem
- 8.1: CPU
- 8.2: CPU
- 8.3: CPU
- 8.4: CPU
- 9: Clientnetzwerk

## Patentansprüche

1. Verfahren zur Nutzung von Computerressourcen bei Datenverarbeitungs- und/oder Datenbanksystemen (7), **dadurch gekennzeichnet, dass**
- mehr als zwei eigenständige Recheneinheiten (1.1, 1.2, 1.n),
- jeweils bestehend aus CPU (8.1, 8.2, 8.3, 8.4), Arbeitsspeicher (5.1, 5.2, 5.3, 5.4), mindestens einem Netzwerkanschluss (3.1, 3.2, 3.n) für ein Clusternetzwerk und mindestens einem Netzwerkanschluss (6.1, 6.2, 6.n) für ein Clientnetzwerk (9),
- über ein Clusternetzwerk zusammengeschaltet werden,
- welche Recheneinheiten (1.1, 1.2, 1.n) Daten im Arbeitsspeicher (5.1, 5.2, 5.3, 5.4) halten,
- wobei jede Recheneinheit (1.1, 1.2, 1.n) ihre Arbeitsspeicher-Daten über einen XOR Algorithmus auf die anderen Recheneinheiten (1.1, 1.2, 1.n) sichert, wo diese ebenfalls im Arbeitsspeicher (5.1, 5.2, 5.3, 5.4) abgelegt werden,
- wobei jede Recheneinheit (1.1, 1.2, 1.n) die Anfragen von Clients (2.1, 2.2, 2.3, 2.n) annehmen, diese parallelisieren, an die anderen Recheneinheiten (1.1, 1.2, 1.n) weiterleiten, diese parallelisierten Abfragen parallel ausführen, das eigene Ergebnis und die Ergebnisse der anderen Recheneinheiten (1.1, 1.2, 1.n) zusammenfügen und an den Client (2.1, 2.2, 2.3, 2.n) zurückgeben kann.

2. Verfahren nach Anspruch 1,
**dadurch gekennzeichnet,**
**dass** die Sicherung der Arbeitsspeicher-Daten einer Recheneinheit (1.1, 1.2, 1.n) über einen XOR Algorithmus auf die anderen Recheneinheiten (1.1, 1.2, 1.n) in RAID5 Manier erfolgt.

3. Verfahren nach Anspruch 1 oder 2,
**dadurch gekennzeichnet,**
**dass** die Clients (2.1, 2.2, 2.3, 2.n) periodisch über die Auslastung jeder Recheneinheit (1.1, 1.2, 1.n) informiert werden und bei Abfragen diejenige Recheneinheit (1.1, 1.2, 1.n) auswählen, welche die geringste Auslastung hat.

4. Verfahren nach Anspruch 1, 2 oder 3,
**dadurch gekennzeichnet,**
**dass** die Clients (2.1, 2.2, 2.3, 2.n) die Partitionierung der Daten durchführen, indem sie Einfügeoperationen abwechselnd auf jeweils anderen Recheneinheiten (1.1, 1.2, 1.n) durchführen.

5. Verfahren nach Anspruch 1 bis 4,
**dadurch gekennzeichnet,**
**dass** jede Recheneinheit (1.1, 1.2, 1.n) die Verfügbarkeit der anderen Recheneinheiten (1.1, 1.2, 1.n) überwacht, und bei Ausfall einer solchen die Rekonstruktion der XOR-gesicherten Daten einleitet.

6. Verfahren nach einem der Ansprüche 1 bis 5,
**dadurch gekennzeichnet,**
**dass** in einstellbaren Abständen die Daten aus dem Arbeitsspeicher (5.1, 5.2, 5.3, 5.4) auf ein anderes Speichermedium (4.1, 4.2, 4.n) gespeichert werden.

7. Datenverarbeitungs- und/oder Datenbanksystem (7), umfassend:
- mehr als zwei eigenständige Recheneinheiten (1.1, 1.2, 1.n),
- jeweils bestehend aus CPU (8.1, 8.2, 8.3, 8.4), Arbeitsspeicher (5.1, 5.2, 5.3, 5.4), mindestens einem Netzwerkanschluss (3.1, 3.2, 3.n) für ein Clusternetzwerk und mindestens einem Netzwerkanschluss (6.1, 6.2, 6.n) für ein Clientnetzwerk (9),
- welche Recheneinheiten (1.1, 1.2, 1.n) über ein Clusternetzwerk zusammengeschaltet sind,
**dadurch gekennzeichnet, dass**
- die Recheneinheiten (1.1, 1.2, 1.n) Daten im Arbeitsspeicher (5.1, 5.2, 5.3, 5.4) halten,
- wobei jede Recheneinheit (1.1, 1.2, 1.n) ihre Arbeitsspeicher-Daten über einen XOR Algorithmus auf die anderen Recheneinheiten (1.1, 1.2, 1.n) sichert, wo diese ebenfalls im Arbeitsspeicher (5.1, 5.2, 5.3, 5.4) abgelegt werden,
- wobei jede Recheneinheit (1.1, 1.2, 1.n) über eine Abfrage-Einheit verfügt, die Anfragen von Clients (2.1, 2.2, 2.3, 2.n) annehmen, diese parallelisieren, an die anderen Recheneinheiten (1.1, 1.2, 1.n) weiterleiten, diese parallelisierten Abfragen parallel ausführen, das eigene Ergebnis und die Ergebnisse der anderen Recheneinheiten (1.1, 1.2, 1.n) zusammenfügen und an den Client (2.1, 2.2, 2.3, 2.n) zurückgeben kann.

8. Datenverarbeitungssystem nach Anspruch 7,
**dadurch gekennzeichnet,**
**dass** das Client-Netzwerk (9) in das Clusternetzwerk integriert ist, oder dass das Clusternetzwerk in das Client-Netzwerk (9) integriert ist.

9. Datenverarbeitungssystem nach Anspruch 7 oder 8,
**dadurch gekennzeichnet,**
**dass** jede Recheneinheit (1.1, 1.2, 1.n) über eine seperate, eingebaute unterbrechungsfreie Stromversorgung verfügt.

10. Datenverarbeitungssystem nach Anspruch 7 oder 8,
**dadurch gekennzeichnet,**
**dass** die Sicherung der Arbeitsspeicher-Daten einer Recheneinheit (1.1, 1.2, 1.n) über einen XOR Algorithmus auf die anderen Recheneinheiten (1.1, 1.2, 1.n) in RAID5 Manier erfolgt.
